# EUROPÄISCHE PATENTSCHRIFT

(11) **EP 2 441 701 B1**
(45) Veröffentlichungstag und Bekanntmachung des Hinweises auf die Patenterteilung: **02.07.2014**
(21) Anmeldenummer: 10187699.3
(22) Anmeldetag: 15.10.2010
(51) Int. Cl.: B65D 85/68

(54) **Transportvorrichtung und Transportmittel damit**
Transport device and means of transport therewith
Dispositif de transport et moyen de transport avec un tel dispositif

(43) Veröffentlichungstag der Anmeldung: 18.04.2012
(73) Patentinhaber: Deutsche Post AG, 53113 Bonn (DE)
(72) Erfinder: Kohlgrüber, Sven, 64546 Mörfelden-Waldorf (DE)
(74) Vertreter: Jostarndt, Hans-Dieter

(56) Entgegenhaltungen:
- WO-A1-97/05349
- WO-A1-2005/100087
- US-A- 5 213 458
- US-A- 5 344 266
- US-A- 5 890 855
- US-B1- 6 694 894

## Beschreibung

Die Erfindung betrifft eine Vorrichtung für den Transport von Fahrzeugen, wobei bei einer vorgegebenen Maximalhöhe des Systems möglichst viele Fahrzeuge auf einer gegebenen Grundfläche transportiert werden sollen.

Fahrzeuge, vor allem Kraftfahrzeuge, werden heute in breitem Umfang über teilweise große Strecken transportiert. Dabei müssen die Fahrzeuge gegen Beschädigungen geschützt werden. Dies trifft insbesondere dann zu, wenn die Fahrzeuge besonders wertvoll sind, also z.B. bei Rennfahrzeugen, Oldtimern, Prototypen, Ausstellungsfahrzeugen oder andere seltenen Fahrzeugen. Solche Fahrzeuge werden auch vermehrt per Luftfracht transportiert, wobei hier dem Auftraggeber bei einer gegebenen Maximalhöhe der Fracht die benötigte Transportfläche vom Betreiber des Flugzeugs in Rechnung gestellt wird. Werden solche Fahrzeuge via Schiff oder über den Landweg versendet, werden sie vermehrt mittels Großraumtransportbehältnissen, sogenannten Containern, transportiert, um sie vor Beschädigungen zu schützen und den Verladeaufwand zu minimieren. Die Höhe solcher Container ist ebenfalls limitiert. Werden die Fahrzeuge im gemischten Transportverkehr versendet, d.h. z.B. via Zug zum Hafen oder Flughafen gebracht, von wo sie via Schiff oder Flugzeug weiterversendet werden, werden sie üblicherweise aus eigener Kraft auf den Zugtransportwagen und wieder herunter bewegt, um anschließend auf eine Bereitstellungfläche gefahren zu werden. Von dort werden sie bei Luftfracht üblicherweise auf Flugzeugpaletten gefahren. Für die Seefracht werden sie entweder in die erwähnten Container oder in sogenannte RoRo-Schiffe gefahren. Die hierzu erforderlichen vielen Motorstarts mit anschließenden kurzen Laufzeiten sind unerwünscht.

Container der eingangs genannten Art sind bekannt und z.B. in der ISO 668 genormt. Es handelt sich hierbei um sogenannte Seefrachtcontainer, die als 10 Fuß, 16 Fuß, 20 Fuß und 40 Fuß Container auch für den Transport von z.B. Kraftfahrzeugen geeignet sind und auch benutzt werden. Solche Container sind sehr robust gebaut, was sich allerdings in einem hohen Eigengewicht niederschlägt. Daher sind solche Container nicht für den Transport via Luftfracht geeignet.

In der WO 96/26849 wird eine Vorrichtung für den Transport von Kraftfahrzeugen offenbart, die es erlaubt, Fahrzeuge übereinander zu transportieren, wobei die oberen Fahrzeuge in einem Winkel über den unteren Fahrzeugen angeordnet sein können. Dadurch kann die Gesamthöhe von zwei übereinander zu transportierenden Fahrzeugen minimiert werden. Die Erfindung schlägt dazu in der Höhe variable Radträger vor, auf denen die Räder der oberen Fahrzeuge zu stehen kommen. Jeweils zwei dieser Radträger werden für ein Fahrzeug benötigt. Die Vorrichtung hat einen abnehmbaren oder in der Höhe verstellbaren oberen Rahmen. Die Radträger können in einem Schienensystem axial zur Fahrzeugachse bewegt werden, so dass unterschiedliche Radstände der zu transportierenden Fahrzeuge ausgeglichen werden und die oberen Fahrzeuge über die unteren Fahrzeuge hinweg positioniert werden können, um anschließend einzelne Fahrzeugachsen abzusenken und so die oberen Fahrzeuge in einen Winkel zu stellen, so dass sie die Karosserieabsenkungen, z.B. für den Kofferraum oder über der Motorhaube, der unteren Fahrzeuge ausgenutzt werden können und die Gesamthöhe der beiden übereinander zu transportierenden Fahrzeuge minimiert wird. Das System ist fest auf einem Fahrzeug zum Fahrzeugtransport angeordnet. Es ist für den Lufttransport auf Grund seines Eigengewichts nicht geeignet. Soll die Transportart - Schiene, Strasse, Schiff, Flugzeug - geändert werden, müssen die Fahrzeuge entladen und auf das andere Transportmittel geladen werden, also selbst bewegt werden.

Ein ähnliches System wird in der EPO 274 882 A1 offenbart. Ein fest auf einem Lastkraftwagenanhänger installiertes System kann Fahrzeuge auf in unterschiedlichen Höhen vertikal fixierbare Radträger heben, die selbst axial in Fahrzeugachsrichtung über die Länge des Anhängers bewegt werden können. Diese Vorrichtung ist mit den gleichen Nachteilen wie zuvor beschrieben behaftet.

WO 88/05001 schlägt einen intermodal nutzbaren Container vor, in dem jeweils zwei Fahrzeuge übereinander transportiert werden können, wobei an den Längsseiten der Containerinnenwände Schienen befestigt sind, in denen Radträger laufen. Ein Fahrzeug kann mit seiner Vorder- und Hinterachse in Radträgern in unterschiedlicher Höhe stehen und dadurch ebenfalls in einen Winkel gestellt werden, so dass die Karosserieabsenkungen, z.B. für den Kofferraum oder über der Motorhaube, der unteren Fahrzeuge ausgenutzt werden können und die Gesamthöhe der beiden übereinander zu transportierenden Fahrzeuge minimiert wird. Dieses System ist zwar intermodal nutzbar, jedoch zumindest für die Luftfracht auf Grund seines Eigengewichts ungeeignet.

US 5,890,855 offenbart ein Vorrichtung für den Transport von Fahrzeugen mit einer Deckpalette und einer Grundpalette, wobei das obere Fahrzeug in einem Winkel über das untere Fahrzeug angeordnet sein kann.

Alle aus dem Stand der Technik bekannten Vorrichtungen weisen darüber hinaus den Nachteil auf, dass sie im beladenen wie im unbeladenen Zustand das gleiche Transportvolumen erfordern.

Aufgabe der Erfindung ist es daher, eine Vorrichtung für den Transport von Fahrzeugen bereitzustellen, die für den Transport via Luftfracht, Seefracht und den Landtransport geeignet ist und die die Höhe von zwei übereinander zu transportierenden Fahrzeugen minimiert. Dabei sollten die Fahrzeuge auch bei einem gemischten Land-, See- und / oder Lufttransport nicht von der Vorrichtung entladen werden müssen.

Erfindungsgemäß wird die Aufgabe mit einer Vorrichtung mit den Merkmalen des unabhängigen Anspruchs 1 gelöst. Vorteilhafte Ausführungsformen der Vorrichtung ergeben sich aus den Unteransprüchen 2 bis 13.

Kern der Erfindung ist es, eine Vorrichtung vorzusehen, die eine Grundpalette und eine Deckpalette enthält. Die Deckpalette stützt sich auf Galgen ab, die ihrerseits auf der Grundpalette gründen. Die Galgen weisen in der Höhe individuell verstellbare Hubstangen auf, so dass die Deckpalette gegenüber der Grundpalette in Längsrichtung neigbar ist. Dadurch können zwei Fahrzeuge so übereinander angeordnet werden, dass das obere Fahrzeug mittels Neigung der Deckpalette die niedrigeren Konturen des unteren Fahrzeugs, üblicherweise den Bereich des Motors oder des Kofferraums, so ausnutzt, dass es an einer dieser Stellen mit seiner dort liegenden Fahrzeugachse tiefer zu stehen kommt als mit seiner anderen Fahrzeugachse. Wenn das obere Fahrzeug so angeordnet wird, dass sich an dieser Stelle seine hohen Konturen befinden, kann die Gesamthöhe der beiden übereinander stehenden Fahrzeuge minimiert werden. Zum Beladen der Vorrichtung kann die Deckpalette beispielsweise mit einem Flurförderfahrzeug von der Vorrichtung abgehoben werden. Ein Fahrzeug kann auf die Grundpalette auffahren. Ein zweites Fahrzeug kann auf die flach auf dem Boden liegende Deckpalette auffahren. Nach dem Sichern des Fahrzeugs kann die Deckpalette mitsamt dem sich darauf befindlichen Fahrzeug beispielsweise mit einem Flurförderfahrzeug auf die Vorrichtung gehoben und mit ihr verbunden werden. Um die Deckpalette in einem Winkel gegenüber der Grundpalette anzuordnen, kann ein Flurförderfahrzeug mit einer um seine Längsachse drehbaren Lastaufnahmevorrichtung verwendet werden, das die Deckpalette in einem entsprechenden Winkel auf die in der Höhe individuell eingestellten Galgen hebt. Steht ein solches Flurförderfahrzeug nicht zur Verfügung, kann im ersten Schritt die Deckpalette waagerecht auf die Galgen gesetzt werden. In einem zweiten Schritt kann das Flurförderfahrzeug die Deckpalette an einer Stirnseite wieder anheben, die entsprechenden Hubstangen können auf dieser Seite in der Höhe verstellt und anschließend kann die einseitig angehobene Deckpalette auf die auf Höhe eingestellten Hubstangen abgesenkt werden. Nach Einstecken und Sichern der entsprechenden Bolzen ist die Deckpalette mit dem Rest der Vorrichtung fest verbunden.

An einer Stirnseite der Vorrichtung ist ein Stützelement angeordnet, auf dem die Vorrichtung in Längsrichtung zumindest dann verschiebbar ist, wenn sie an der gegenüberliegenden Stirnseite leicht angehoben wird. Auf diese Weise kann die Vorrichtung in ein Gehäuse mit limitierter Höhe hinein und auch wieder hinaus bewegt werden. Solche Gehäuse können Transportmittel, wie Seefrachtcontainer, Kofferaufbauten von Lastkraftwagen oder auch Flugzeugrümpfe sein. Das Höhenlimit kann sich z.B. bei 3m befinden.

In der Erfindung kann die Deckpalette von den Galgen gelöst werden. Die Galgen sind lösbar mit der Grundpalette verbunden oder mit Hilfe von Scharnieren an der Grundpalette befestigt, so dass sie flach auf die Grundpalette gelegt werden können. Die Deckpalette kann flach auf die auf die Grundpalette gelegten Galgen aufgelegt werden, so dass die Vorrichtung für den Leertransport flach zusammenlegbar ist. Auf diese Art können mehrere zusammengelegte Vorrichtungen übereinander z.B. in einem Seefrachtcontainer oder einem Flugzeugrumpf platzsparend transportiert werden.

Selbstverständlich kann die Vorrichtung auch für den Transport von anderem Ladegut als Fahrzeugen benutzt werden. Auch ist es möglich, die Vorrichtung für den gemischten Transport von Fahrzeugen und sonstigem Ladegut zu verwenden.

Weitere Vorteile, Besonderheiten und zweckmäßige Ausgestaltungen der Erfindung ergeben sich aus den Unteransprüchen und der nachfolgenden Darstellung bevorzugter Ausführungsbeispiele anhand der Abbildungen.

Von den Abbildungen zeigen
- Fig. 1: eine Seitenansicht der Vorrichtung mit in maximaler Höhe angeordneter Deckpalette
- Fig. 2: eine Ansicht der Vorrichtung von einer Stirnseite aus
- Fig. 3: eine Seitenansicht der Vorrichtung mit in minimaler Höhe angeordneter Deckpalette
- Fig. 4: eine Seitenansicht der Vorrichtung mit maximal geneigter Deckpalette
- Fig.5: eine Seitenansicht der zum Verschieben einseitig angehobenen Vorrichtung
- Fig. 6: einen Abweiser für Gabelzinken (Einzelheit A aus Fig. 5)
- Fig. 7: ein Abstützelement (Einzelheit B aus Fig. 5)
- Fig. 8: eine Seitenansicht der flach zusammengelegten Vorrichtung
- Fig .9: eine Draufsicht der flach zusammengelegten Vorrichtung

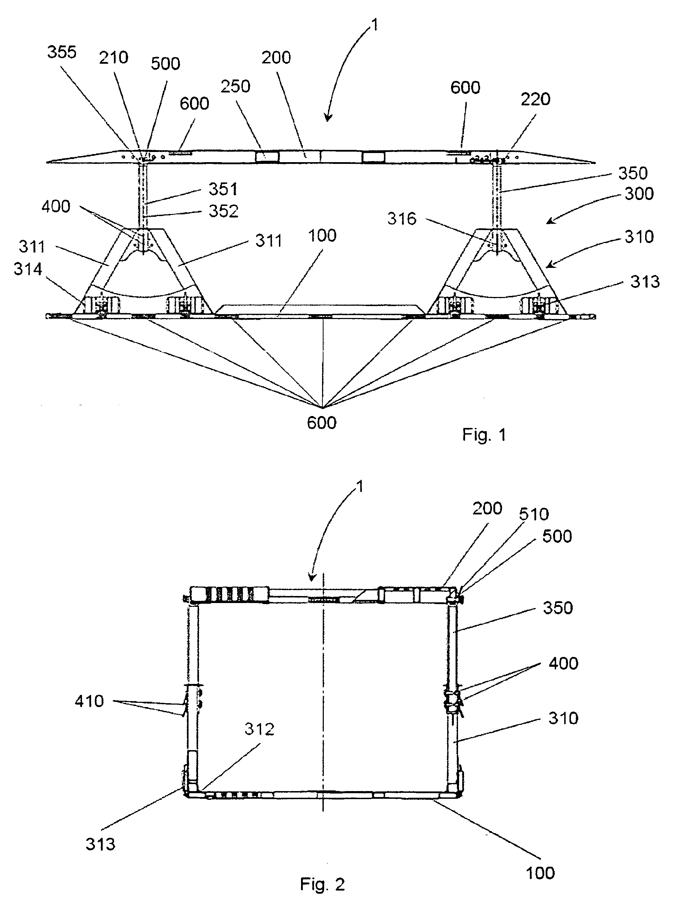

In Fig. 1 ist die Seitenansicht der erfindungsgemäßen Vorrichtung (1) zu sehen, wobei sich die Deckpalette (200) in maximaler Höhe über der Grundpalette (100) befindet. Insgesamt vier Galgen (300), davon in der Ansicht zwei sichtbar, bestehen jeweils aus einer Verstelleinheit (310) und einer Hubstange (350). Die Hubstange (350) besteht aus einem rohrförmigen Teil (351) und einem gabelförmigen Teil (355), wobei das gabelförmige Teil (355) an einem Ende der Hubstange (350) angeordnet ist. Das rohrförmige Teil (351) der Hubstange (350) weist in einem Rastermaß Durchgangsbohrungen (352) in radialer Richtung auf. Die Verstelleinheit (310) besteht aus zwei Beinen (311), die in einem Winkel zueinander angeordnet sind. Mit einem ersten Ende stützen sich die Beine (311) auf der Grundpalette (100) ab, an ihrem zweiten Ende sind sie über ein Joch (315) miteinander verbunden. Das Joch (315) weist einen rohrförmigen Abschnitt (316) zur Aufnahme der Hubstange (350) auf. Durch diesen rohrförmigen Abschnitt (316) führen im gleichen Abstand des Rastermaßes der Durchgangsbohrungen (352) durch die Hubstange (350) zwei Durchgangsbohrungen (317) in radialer Richtung. Der Durchmesser der Durchgangsbohrungen (317, 352) ist nahezu gleich, so dass Bolzen (400) durch beide Durchgangsbohrungen (317, 352) geschoben werden können, wenn sie fluchten.

Die Hubstange ist andererseits über einen Bolzen (500), der durch eine Durchgangsbohrung (356) durch das gabelförmige Teil (355) der Hubstange (350) und eine entsprechende Durchgangsbohrung (210) bzw. ein Langloch (220) in der Deckpalette (200) geführt werden kann, wenn die Durchgangsbohrungen (356, 210) fluchten, mit der Deckpalette (200) verbunden.

Dadurch, dass sich über der Höhe der Hubstange (350) in einem Rastermaß verteilt mehrere Durchgangsbohrungen (352) befinden, kann die Deckpalette in mehreren unterschiedlichen Höhen über der Grundpalette (100) befestigt werden. Als Ausgleich für die sich verändernde gestreckte Länge der Deckpalette, wenn sie in einem Winkel angeordnet ist, weist die Deckpalette nur an einer ersten Stirnseite(110) eine konzentrische Bohrung für die Aufnahme des Bolzens (210), mit dem die Hubstange (350) mit der Deckpalette (200) verbunden wir, auf, während an einer zweiten Stirnseite (120) hierfür ein Langloch (220) vorgesehen ist.

Statt der Durchgangsbohrung (210) kann auch ein Sackloch vorgesehen werden. In dem Sackloch kann sich eine Geometrie befinden, in der der Bolzen (500) z.B. durch Verdrehen gesichert werden kann, wenn er selbst eine entsprechende Geometrie aufweist.

Sowohl an der Grundpalette (100) als auch an der Deckpalette (200) sind Befestigungsprofile (600) vorgesehen, an denen Ladung befestigt werden kann.

Fig. 2 ist eine Ansicht auf eine Stirnseite (110, 120) der Vorrichtung (1), bei der die Deckpalette (200) in maximaler Höhe über der Grundpalette (100) befestigt ist. Die Bolzen (400, 500) sind mit Stahlseilen (410, 510) gegen Herausfallen gesichert. Die Verstelleinheiten (310) sind mit Scharnieren (312) an der Grundpalette (100) klappbar befestigt. Im aufgeklappten Zustand, d.h. wenn sich der Galgen (300) in axialer Richtung der Vorrichtung (1) gesehen in einem Winkel von ca. 90° zur Grundpalette (100) befindet, wird der Galgen (300) mit einem Spannelement (313), das sich auf der Außenseite des Galgens (300) befindet, mit der Grundpalette (100) verspannt, so dass er nicht mehr einklappen kann. Durch die Anordnung der Scharniere (313) auf der dem Spannelement (313) gegenüberliegenden Innenseite des Galgens (300) kann der Galgen (300) auch nicht wesentlich über die senkrechte Stellung gegenüber der Grundpalette (100) nach außen geklappt werden. Zum Schutz der Spannelemente (313) sind Schutzelemente (314) vorgesehen, die an dem Galgen (300) befestigt sind.

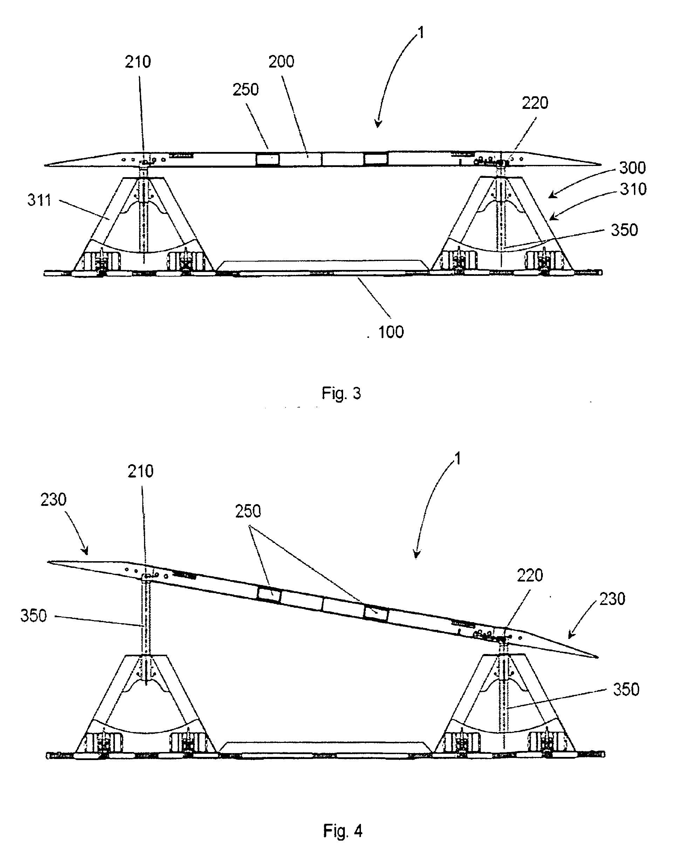

Fig. 3 ist die Seitenansicht der erfindungsgemäßen Vorrichtung (1), wobei sich die Deckpalette (200) in minimaler Höhe über der Grundpalette (100) befindet. Jede Hubstange (350) ist möglichst weit durch den rohrförmigen Abschnitt (316) des jeweiligen Jochs (315) durchgetaucht.

In Fig. 4 ist die Vorrichtung (1) mit maximal geneigter Deckpalette (200) in einer Seitenansicht dargestellt. Durch die Neigung der Deckpalette (200) verändert sich der Abstand der Bolzeneingriffspunkte (210, 220) in der Abwicklung. Daher weist die Deckpalette (200) auf der einen Seite eine Durchgangsbohrung (210) für den Bolzen (500) auf, auf der anderen Seite hingegen ein Langloch (220), so dass trotz der Neigung der Deckpalette (200) Bolzen (500) auf beiden Seiten eingeführt und die Verbindung zwischen Deckpalette (200) und Hubstange (500) hergestellt werden können. In der Deckpalette (200) sind an den Längsseiten zwei Einfahrschuhe (250) vorgesehen. Hier können die Zinken eines Gabelstaplers einfahren und die Vorrichtung (1) anheben. Die Anordnung der Einfahrschuhe (250) in der Deckpalette (200) bedingt, dass die Deckpalette (200) von der Vorrichtung (1) abgehoben werden kann. Dadurch können Fahrzeuge sehr einfach auf die Deckpalette (200) geladen werden, da sie flach auf den Boden aufgelegt werden kann. Die Deckpalette (200) weist dazu eine entsprechende Auffahrschräge (230) an mindestens einem Ende auf. Nach Aufsetzen auf und Verbinden der Deckpalette (200) mit den Galgen (300), die ihrerseits mit der Grundpalette (100) verbunden sind, kann durch Anheben der Deckpalette (200) beispielsweise mit einem Flurförderfahrzeug die gesamte Vorrichtung (1) angehoben und transportiert werden.

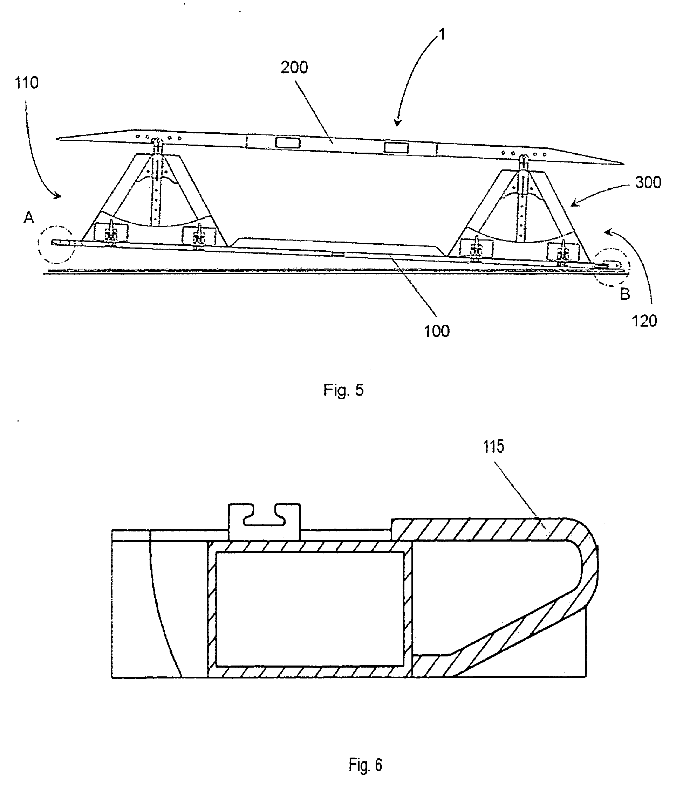

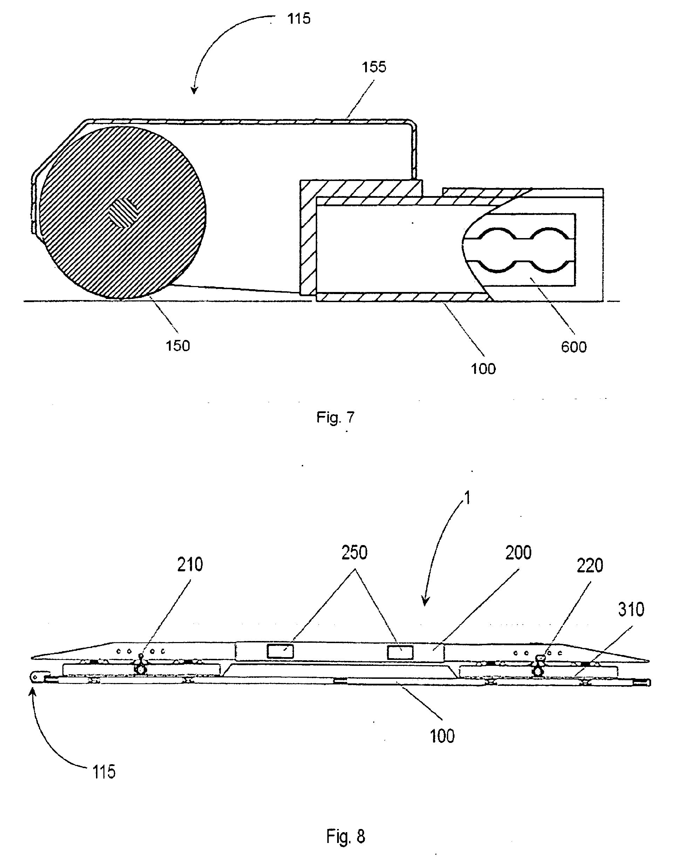

Fig. 5 ist eine Seitenansicht der Vorrichtung (1 ), wobei eine erste Stirnseite (110) der Vorrichtung (1) leicht angehoben ist, um die gesamte Vorrichtung (1) in Längsrichtung auf dem an der zweiten Stirnseite (120) vorgesehenen Stützelement (150) (siehe Ausschnittvergrößerung in Fig. 7) verschieben zu können. Durch das Anheben der ersten Stirnseite (110) kommt das Stützelement (150) in Kontakt mit dem Boden. Im gezeigten Ausführungsbeispiel genügt dazu ein Anheben der ersten Stirnseite (110) so, dass sich die gesamte Vorrichtung (1) in einem Winkel von ca. 2,5° zum Boden befindet. Im gezeigten Beispiel besteht das Stützelement (150) aus einer Rolle, die um sich selbst drehbar so an der Grundpalette (100) befestigt ist, dass sie sich mit ihrem äußeren Umfang ca. 1 mm über dem Boden befindet, wenn die Grundpalette (100) darauf flach auf dem Boden aufsteht. Selbstverständlich sind aber auch andere Kombinationen der Anordnung des Stützelements (150) und der erforderlichen Anhebehöhe denkbar.

Fig. 6 stellt eine Ausschnittvergrößerung der Einzelheit "A" aus Fig. 5 dar. Zum bequemen Anheben der ersten Stirnseite (110) ist am Ende der Grundpalette (100) an dieser Seite (110) ein Gabelzinkenabweiser (115) angeordnet. Dieser Gabelzinkenabweiser (115) besteht aus einem Profil, dass eine in Außenrichtung ansteigende Unterkante aufweist. Fahren die Zinken eines Flurförderfahrzeugs wie z.B. eines Gabelstaplers unter diese ansteigende Unterkante, wird die Vorrichtung (1) soweit angehoben, dass die gesamte Zinke des Flurförderfahrzeugs unter die Vorrichtung (1) geschoben werden kann. Nun kann die Zinke und damit die gesamte Vorrichtung (1) an der ersten Stirnseite (110) soweit angehoben werden, dass das Stützelement (150) an der zweiten Stirnseite (120) in Kontakt mit dem Boden kommt, so dass die

Vorrichtung (1) auf diesem Stützelement (150) von dem Flurförderfahrzeug verschoben werden kann.

Fig. 7 stellt eine Ausschnittvergrößerung der Einzelheit "B" aus Fig. 5 dar. Das Stützelement (150) wird in dieser Ausführungsform von einer Rolle gebildet, die an der zweiten Stirnseite (120) der Grundpalette (100) so angebracht ist, dass sie mit ihrem Außenumfang ca. 1 mm über dem Boden schwebt, wenn die Vorrichtung (1) flach auf dem Boden aufsteht. Dadurch steht die Vorrichtung (1) im nicht einseitig angehobenen Zustand sicher und rutschfest auf dem Boden. Erst durch einseitiges Anheben der Grundpalette (100) an der gegenüberliegenden ersten Stirnseite (110) kommt die Rolle(150) mit dem Boden in Kontakt. Über der Rolle (150) ist ein Schutzelement (155) angeordnet, das verhindert, dass Gegenstände von oben zwischen Rolle (150) und Grundpalette (100) fallen, die ein Rollen behindern könnten. Zum Anderen kann das Schutzelement (155) auch den mit dem Transport beschäftigten Arbeiter vor möglichen Verletzungen schützen.

Weiterhin ist in Fig. 7 ein Befestigungsprofil (600) für die Befestigung von Ladung zu erkennen. Es handelt sich hierbei um eine vor Allem aus der Frachtfliegerei bekannte Systemschiene. Es sind aber auch anders geformte Befestigungsprofile (600) vorstellbar.

Fig. 8 stellt die flach zusammengelegte Vorrichtung (1) in einer Seitenansicht dar. Die Deckpalette (200) wurde von den Galgen (300) abgehoben, die Hubstangen (350) soweit wie möglich in die rohrförmigen Abschnitte (316) der Joche (315) eingefahren und die Spannelemente (313) gelöst. Die Galgen (300) wurden flach auf die Grundpalette (100) geklappt und die Deckpalette (200) wurde flach auf die ihrerseits flach liegenden Galgen (300) gelegt. Das so entstandene Paket kann z.B. mit Spanngurten zusammen gebunden werden. Es sind aber auch Verbindungsmöglichkeiten mittels Bolzen oder Klammern vorstellbar, die durch Deck- (200) und Grundpalette (100) reichen bzw. von außen über Deck- (200) und Grundpalette (100) geschoben werden können. Wenn sowohl Grund- (100), als auch Deckpalette (200) nur Auffahrbleche als Fahrspuren aufweisen, die nicht miteinander verbunden sind, lassen sich Verbindungsmöglichkeiten mit Klammern vorstellen, die von innen über Grund- (100) und Deckpalette (200) geschoben werden können. Andere Möglichkeiten sind Klammern, die in entsprechende Aussparungen in Deck- (200) und/oder Grundpalette (100) eingeschoben werden. Durch die Verbindung von Deck- (200) und Grundpalette (100) ist es möglich, die gesamte Vorrichtung (1) durch Anheben der Deckpalette (200) z.B. mit einem Flurfördergerät, das an den Einfahrschuhen (250) angreift, anzuheben und zu transportieren. Insbesondere ist es möglich, mehrere Vorrichtungen (1) übereinander zu stapeln, um mehrere unbeladene Vorrichtungen (1) auf der Grundfläche einer Vorrichtung (1) zu transportieren.

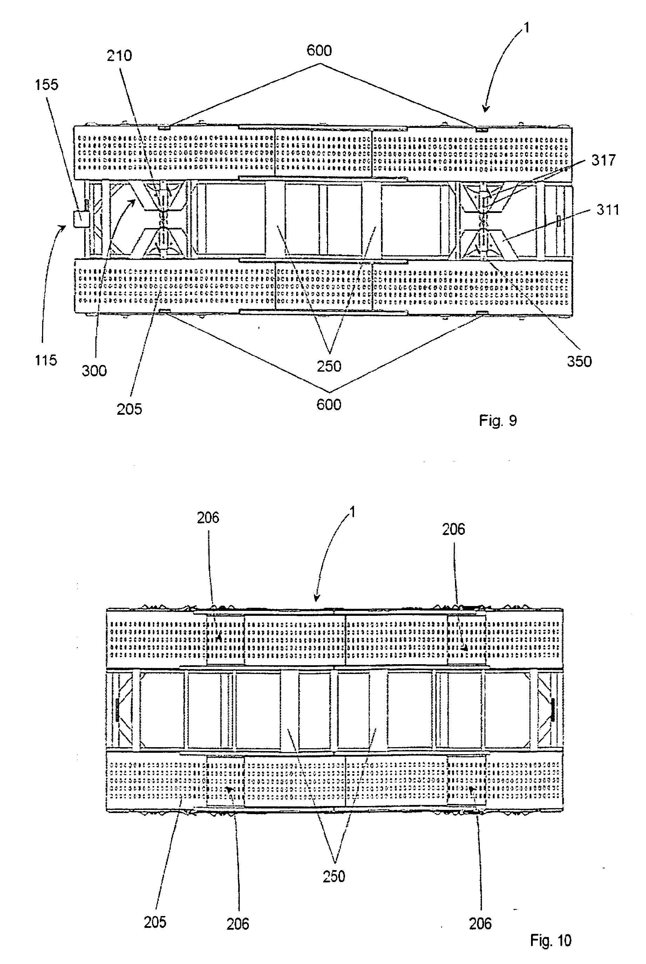

Fig. 9 ist die Draufsicht auf die flach zusammengelegte Vorrichtung (1). Sowohl die Deckpalette (200), als auch die Grundpalette (100) weisen Auffahrbleche (205) als Fahrspuren auf. Diese sind aus Gewichtseinsparungsgründen nur im Bereich möglicher Räder von zu transportierenden Fahrzeugen angeordnet. Die Auffahrbleche (205) bestehen aus Lochblechen. Die Galgen (300) sind flach auf die Grundpalette (100) geklappt, wobei die Hubstangen (350) möglichst weit in die rohrförmigen Abschnitte (316) der Joche (315) eingeschoben sind. Die Einfahrschuhe (250) erstrecken sich als Kastenprofil über die gesamte Breite der Vorrichtung (1).

Fig. 10 ist die Draufsicht auf die aufgeklappte Vorrichtung (1). In dieser Ausführungsform sind Mulden (206) eingelassen, in die die Räder bestimmter Fahrzeuge zu stehen kommen. Dadurch kann die Gesamthöhe der beladenen Vorrichtung weiter minimiert werden.

Die gesamte Vorrichtung kann aus Gewichtseinsparungsgründen aus Aluminium bzw. einer Aluminiumlegierung bestehen. Zur Fixierung der Vorrichtung im Transportmedium können an der Vorrichtung Ziehösen vorgesehen sein.

### Bezugszeichenliste

- 1: Vorrichtung
- 100: Grundpalette
- 110: erste Stirnseite
- 115: Gabelzinkenabweiser
- 120: zweite Stirnseite
- 150: Stützelement
- 155: Schutzelement
- 200: Deckpalette
- 205: Auffahrblech
- 206: Radmulde
- 210: Durchgangsbohrung
- 220: Langloch
- 230: Auffahrschräge
- 250: Einfahrschuh
- 300: Galgen
- 310: Verstelleinheit
- 311: Bein
- 312: Scharnier
- 313: Spannelement
- 314: Schutzelement
- 315: Joch
- 316: rohrförmiger Abschnitt
- 317: Durchgangsbohrung
- 350: Hubstange
- 351: rohrförmiges Teil der Hubstange
- 352: Durchgangsbohrung
- 355: Gabelförmiges Teil der Hubstange
- 400: Bolzen
- 410: Stahlseil
- 500: Bolzen
- 510: Stahlseil
- 600: Befestigungsprofil

## Patentansprüche

1. Vorrichtung (1) für den Transport mindestens zweier Fahrzeuge übereinander, wobei
die Vorrichtung (1) eine Grundpalette (100) und eine Deckpalette (200) enthält, wobei die Deckpalette (200) mittels individuell in der Höhe verstellbarer Galgen (300), die aus einer Verstelleinheit (310) und einer Hubstange (350) bestehen, wobei die Hubstange (350) in unterschiedlichen Höhen an der Verstelleinheit (310) befestigt werden kann, mit der Grundpalette (100) derart verbunden ist, dass die Deckpalette (200) gegenüber der Grundpalette (100) in Längsrichtung geneigt angeordnet sein kann, wobei ferner in der Deckpalette (200) an den Längsseiten zwei Einfahrschuhe (250) für Lastaufnahmemittel eines Flurförderfahrzeugs angeordnet sind, und die Deckpalette (100) von den Galgen (300) gelöst werden kann.

2. Vorrichtung (1) nach Anspruch 1,
**dadurch gekennzeichnet, dass**
die Galgen (300) flach auf die Grundpalette (100) geklappt werden können, wobei die Deckpalette (200) wiederum flach auf die geklappten Galgen (300) gelegt werden kann.

3. Vorrichtung (1) nach einem der vorhergehenden Ansprüche,
**dadurch gekennzeichnet, dass**
die Deckpalette (200) an einer ersten Seite eine Bohrung (210) und an einer zweiten Seite ein Langloch (220) für die Aufnahme jeweils eines Bolzens (500) aufweist, mit der die Deckpalette (200) an den Galgen (300) befestigt ist.

4. Vorrichtung (1) nach einem der vorhergehenden Ansprüche,
**dadurch gekennzeichnet, dass**
Grund-(100) und Deckpalette (200) eine Auffahrvorrichtung (205) für ein Fahrzeug aufweisen, die aus einem Lochblech besteht.

5. Vorrichtung (1) nach einem der vorhergehenden Ansprüche,
**dadurch gekennzeichnet, dass**
die Deckpalette (200) mit einem Bolzen(500) an der Hubstange (350) befestigt ist.

6. Vorrichtung (1) nach einem der vorhergehenden Ansprüche,
**dadurch gekennzeichnet, dass**
die Hubstange (350) mit einem Bolzen (400) an der Verstelleinheit (310) befestigt ist.

7. Vorrichtung (1) nach einem der vorhergehenden Ansprüche,
**dadurch gekennzeichnet, dass**
die Verstelleinheit (310) mit einem Scharnier (312) an der Grundpalette (100) schwenkbar befestigt ist.

8. Vorrichtung (1) nach einem der vorhergehenden Ansprüche,
**dadurch gekennzeichnet, dass**
die Verstelleinheit (310) mit einem Spannelement (313) so an der Grundpalette (100) gesichert werden kann, dass die Verstelleinheit (310) in einer im Wesentlichen senkrechten Stellung gegenüber der Grundpalette (100) fixiert werden kann.

9. Vorrichtung (1) nach einem der vorhergehenden Ansprüche,
**dadurch gekennzeichnet, dass**
an der ersten Stirnseite (110) der Grundpalette (100) ein Gabelzinkenabweiser (115) vorgesehen ist und an der zweiten Stirnseite (120) der Grundpalette (100) ein Stützelement (150) so angeordnet ist, ist dass die Vorrichtung (1) durch Anheben der ersten Stirnseite (110) auf dem Stützelement (150) in Längsrichtung in ein Gehäuse mit limitierter Höhe hinein bewegt werden kann.

10. Vorrichtung (1) nach Anspruch 9,
**dadurch gekennzeichnet, dass**
das das Stützelement (150) um sich selbst drehbar ausgeführt ist.

11. Vorrichtung (1) nach einem der vorhergehenden Ansprüche,
**dadurch gekennzeichnet, dass**
an der Grundpalette (100) und/oder der Deckpalette (200) Vorrichtungen zur Befestigung von Ladegut (600) vorgesehen sind.

12. Vorrichtung (1) nach einem der vorhergehenden Ansprüche,
**dadurch gekennzeichnet, dass**
die Vorrichtung (1) aus einer Aluminiumlegierung besteht.

13. Transportmittel,
**dadurch gekennzeichnet, dass**
das Transportmittel die Vorrichtung nach einem der vorhergehenden Ansprüche enthält.

## Claims

1. A device (1) for the transportation of at least two vehicles one above the other, whereby the device (1) contains a lower pallet (100) and an upper pallet (200), whereby the upper pallet (200) is connected to the lower pallet (100) by means of individually height-adjustable booms (300) that consist of an adjustment unit (310) and a lifting rod (350), whereby the lifting rod (350) can be fastened to the adjustment unit (310) at different heights, in such a way that the upper pallet (200) can be tilted relative to the lower pallet (100) in the longitudinal direction, whereby moreover, two fork entries (250) for load pick-up elements of an industrial floor truck are arranged on the lengthwise sides of the upper pallet (200), and the upper pallet (200) can be detached from the booms (300).

2. The device (1) according to claim 1,
**characterized in that**
the booms (300) can be collapsed so as to be flat onto the lower pallet (100), whereby the upper pallet (200), in turn, can be laid flat onto the collapsed booms (300).

3. The device (1) according to one of the preceding claims,
**characterized in that**
the upper pallet (200) has a through hole (210) on the first side and a slot (220) on the second side, each in order to receive a bolt (500) with which the upper pallet (200) is fastened to the booms (300).

4. The device (1) according to one of the preceding claims,
**characterized in that**
the lower pallet (100) and the upper pallet (200) have a drive-on means (205) consisting of a perforated plate, for a vehicle.

5. The device (1) according to one of the preceding claims,
**characterized in that**
the upper pallet (200) is fastened to the lifting rod (350) by means of a bolt (500).

6. The device (1) according to one of the preceding claims,
**characterized in that**
the lifting rod (350) is fastened to the adjustment unit (310) by means of a bolt (400).

7. The device (1) according to one of the preceding claims,
**characterized in that**
the adjustment unit (310) is pivotably fastened to the lower pallet (100) by means of a hinge (312).

8. The device (1) according to one of the preceding claims,
**characterized in that**
the adjustment unit (310) can be secured by means of a tightening element (313) to the lower pallet (100) in such a way that the adjustment unit (310) can be affixed in an essentially perpendicular position relative to the lower pallet (100).

9. The device (1) according to one of the preceding claims,
**characterized in that**
a fork tine deflector (115) is provided at the first end (110) of the lower pallet (100), and a support element (150) is arranged at the second end (120) of the lower pallet (100) in such a way that, by lifting the first end (110) on the support element (150), the device (1) can be moved in the lengthwise direction into a housing having a limited height.

10. The device (1) according to claim 9,
**characterized in that**
the support element (150) is configured so that it can rotate around itself.

11. The device (1) according to one of the preceding claims,
**characterized in that**
means for securing cargo (600) are provided on the lower pallet (100) and/or on the upper pallet (200).

12. The device (1) according to one of the preceding claims,
**characterized in that**
the device (1) is made of an aluminum alloy.

13. A transportation means,
**characterized in that**
the transportation means contains the device according to one of the preceding claims.

## Revendications

1. Dispositif (1) pour transporter au moins deux véhicules superposés, le dispositif (1) comportant une palette de base (100) et une palette de niveau supérieur (200), la palette de niveau supérieur (200) étant reliée à la palette de base (100) au moyen de potences (300) réglables individuellement en hauteur et composées d'une unité de réglage (310) et d'une tige de levage (350), la tige de levage (350) pouvant être fixée à l'unité de réglage (310) à différentes hauteurs, de manière telle que la palette de niveau supérieur (200) peut être agencée de manière inclinée en direction longitudinale par rapport à la palette de base (100), deux sabots d'entrée (250) pour des moyens de réception de charge d'un véhicule de manutention étant en outre agencés sur les côtés longs dans la palette de niveau supérieur (200), et la palette de niveau supérieur (200) pouvant être détachée des potences (300).

2. Dispositif (1) selon la revendication 1, **caractérisé en ce que** les potences (300) peuvent être repliées à plat sur la palette de base (100), la palette de niveau supérieur (200) pouvant quant à elle être posée à plat sur les potences repliées (300).

3. Dispositif (1) selon l'une des revendications précédentes, **caractérisé en ce que** la palette de niveau supérieur (200) présente, sur un premier côté, un perçage (210) et, sur un deuxième côté, un trou oblong (220) pour recevoir respectivement un axe (500) au moyen duquel la palette de niveau supérieur (200) est fixée aux potences (300).

4. Dispositif (1) selon l'une des revendications précédentes, **caractérisé en ce que** la palette de base (100) et la palette de niveau supérieur (200) comportent un dispositif d'accès (205) pour un véhicule, lequel dispositif est constitué d'une tôle perforée.

5. Dispositif (1) selon l'une des revendications précédentes, **caractérisé en ce que** la palette de niveau supérieur (200) est fixée à la tige de levage (350) au moyen d'un axe (500).

6. Dispositif (1) selon l'une des revendications précédentes, **caractérisé en ce que** la tige de levage (350) est fixée à l'unité de réglage (310) au moyen d'un axe (400).

7. Dispositif (1) selon l'une des revendications précédentes, **caractérisé en ce que** l'unité de réglage (310) est fixée de manière pivotante sur la palette de base (100) au moyen d'une charnière (312).

8. Dispositif (1) selon l'une des revendications précédentes, **caractérisé en ce que** l'unité de réglage (310) peut être bloquée sur la palette de base (100) au moyen d'un élément de serrage (313) de manière telle que l'unité de réglage (310) peut être fixée dans une position sensiblement verticale par rapport à la palette de base (100).

9. Dispositif (1) selon l'une des revendications précédentes, **caractérisé en ce qu'**un élément de guidage de dent de fourche (115) est prévu sur la première face frontale (110) de la palette de base (100) et **en ce qu'**un élément d'appui (150) est agencé de manière telle sur la deuxième face frontale (120) de la palette de base (100) que le dispositif (1) peut, par soulèvement de la première face frontale (110), être déplacé longitudinalement sur l'élément d'appui (150) pour entrer dans un corps de hauteur limitée.

10. Dispositif (1) selon la revendication 9, **caractérisé en ce que** l'élément d'appui (150) est réalisé de manière à pouvoir tourner sur lui-même.

11. Dispositif (1) selon l'une des revendications précédentes, **caractérisé en ce que** sont prévus, sur la palette de base (100) et/ou sur la palette de niveau supérieur (200), des dispositifs pour fixer un chargement (600).

12. Dispositif (1) selon l'une des revendications précédentes, **caractérisé en ce que** le dispositif (1) est constitué d'un alliage d'aluminium.

13. Moyen de transport, **caractérisé en ce que** le moyen de transport contient le dispositif selon l'une des revendications précédentes.
